# EUROPÄISCHE PATENTSCHRIFT

(11) **EP 4 234 861 B1**
(45) Veröffentlichungstag und Bekanntmachung des Hinweises auf die Patenterteilung: **25.03.2026**
(21) Anmeldenummer: 23177729.3
(22) Anmeldetag: 10.01.2020
(51) Int. Cl.: B29C 45/16, B29C 33/16, E05B 85/10, B29C 45/00, E05B 85/12, E05B 17/00, B29L 31/30

(54) **VERFAHREN ZUM HERSTELLEN EINER INNENTÜRGRIFFANORDNUNG EINES FAHRZEUGS**
PRODUCING AN INTERNAL DOOR HANDLE ASSEMBLY OF A VEHICLE
PROCÉDÉ DE FABRICATION D'UN ENSEMBLE POIGNÉE DE PORTE INTÉRIEURE D'UN VÉHICULE

(30) Priorität: 09.04.2019 US 201916378750
(43) Veröffentlichungstag der Anmeldung: 30.08.2023
(62) Teilanmeldung aus: 20151246.4
(73) Patentinhaber: Illinois Tool Works Inc., Glenview IL 60025 (US)
(72) Erfinder: WILKE, Zsolt, Glenview, Illinois 60025 (US); FRIES, Elmar, Glenview, Illinois 60025 (US); CONTINI, Anna Lisa, Glenview, Illinois 60025 (US)
(74) Vertreter: Meissner Bolte Partnerschaft mbB

(56) Entgegenhaltungen:
- WO-A2-2010/066419
- DE-A1- 102005 022 791
- DE-A1- 19 856 902
- JP-A- H1 035 289
- US-A1- 2016 348 410
- B�RKLE . WOBBE ET AL: "B�rkle Wobbe Kombinationstechnologien auf Basis des Spritzgie�verfahrens", 1 January 2016 (2016-01-01), XP055360392, Retrieved from the Internet <URL:http://fachbuch.hanser-ebooks.de/ebook/bid-2079841-kombinationstechnologien-auf-basis-des-spritzgiessverfahrens> [retrieved on 20170330]

## Beschreibung

Die Erfindung betrifft Verfahren zum Herstellen eines Betätigungsabschnitts einer Innentürgriffanordnung eines Fahrzeugs, umfassend ein Gehäuse und einen an dem Gehäuse angeordneten Betätigungsabschnitt.

Der Betätigungsabschnitt kann beispielsweise ein Griffabschnitt sein. Es kann sich beispielsweise um einen schwenkbar an dem Gehäuse gelagerten Griffhebel handeln. Der Betätigungsabschnitt kann dazu ausgebildet sein, von einem Fahrzeuginsassen ergriffen zu werden, um eine Fahrzeugtür von innen zu öffnen und/oder zu schließen. Gehäuse und Betätigungsabschnitt bestehen häufig aus Kunststoff. Aus optischen Gründen besteht manchmal der Wunsch nach einer Metalloptik des Betätigungsabschnitts. Hierzu erfolgt im Stand der Technik eine Verchromung des Griffhebels. Auf diese Weise können hochwertige Oberflächen erzeugt werden, während gleichzeitig der mit der Chromschicht versehene Grundkörper des Betätigungsabschnitts aus einem belastbaren Kunststoff hergestellt werden kann. Eine Verchromung insbesondere unter Verwendung von Chrom VI ist allerdings aus gesundheitlichen und Umweltschutzgründen problematisch.

US2016/348410A1 offenbart ein Herstellungsverfahren im Zweikomponentenspritzguss für dekorierte Innentürgriffanordnungen. Dabei verbleibt der erste Formling in beiden Formhälften.

Eine Alternative zu einer Verchromung ist die Herstellung des Betätigungsabschnitts in einem Spritzgussverfahren mit einem Kunststoff in Metalloptik (Mould In Metal Colour MIMC). Hiermit kann eine der Verchromung ähnliche Optik erreicht werden. Problematisch sind allerdings Oberflächendefekte, wie Fließlinien oder Senken, insbesondere aufgrund von Schwindung des Materials. Hinzu kommt, dass die hierfür verwendeten Kunststoffe nicht immer ausreichend belastbar sind, insbesondere nicht immer die erforderliche maximale Bruchlast besitzen. Dies gilt auch für das Gehäuse.

Ausgehend von dem erläuterten Stand der Technik liegt der Erfindung die Aufgabe zugrunde, ein Verfahren zum Herstellen eines Betätigungsabschnitts einer Innentürgriffanordnung bereitzustellen, das hochwertige Oberflächen des Gehäuses und/oder des Betätigungsabschnitts bei großer Designfreiheit und gleichzeitig guter Belastbarkeit ermöglicht.

Die Erfindung löst die die Aufgabe durch den unabhängigen Verfahrensanspruch 1. Vorteilhafte Ausgestaltungen der Erfindung finden sich in den abhängigen Ansprüchen.

Grundsätzlich löst die Erfindung die Aufgabe für eine Innentürgriffanordnung der eingangs genannten Art dadurch, dass das Gehäuse und/oder der Betätigungsabschnitt einen Trägerabschnitt aus einem ersten Kunststoff und einen mit dem Trägerabschnitt integral, bevorzugt stoffschlüssig, verbundenen Dekorabschnitt, vorzugsweise Sichtabschnitt aus einem anderen, zweiten Material aufweist.

Insbesondere löst die Erfindung die Aufgabe durch eine Innentürgriffanordnung eines Fahrzeugs, die ein Gehäuse und einen am Gehäuse beweglich angeordneten Betätigungsabschnitt aufweist, wobei der Betätigungsabschnitt einen Trägerabschnitt aus einem ersten Kunststoff und einen Dekorabschnitt, vorzugsweise einen sichtbaren Abschnitt, aus einem zweiten, vorzugsweise einem anderen Kunststoff aufweist, der integral, bevorzugt stoffschlüssig, mit dem Trägerabschnitt verbunden ist, wobei vorzugsweise der Dekorabschnitt zumindest teilweise direkt aus dem Fahrzeuginnenraum sichtbar und dem Fahrzeuginnenraum zugewandt ist oder sein soll, wobei der Betätigungsabschnitt im Zweikomponentenspritzgussverfahren hergestellt worden ist.

Wie eingangs erläutert, dient die Innentürgriffanordnung zum Öffnen und/oder Schließen einer Fahrzeugtür aus dem Fahrzeuginnenraum. Dazu wird die Innentürgriffanordnung im Innenraum eines Fahrzeugs, wie eines PKW oder LKW, montiert.

Die Innentürgriffanordnung umfasst ein Gehäuse, mit dem sie an einer Fahrzeugtür befestigt wird. An dem Gehäuse ist ein Betätigungsabschnitt angeordnet, den ein Fahrzeuginsasse manuell betätigen, beispielsweise ergreifen, kann. Der Betätigungsabschnitt kann beweglich an dem Gehäuse gelagert sein, beispielsweise schwenkbar oder translatorisch bewegbar. Es kann sich beispielsweise um einen schwenkbar an dem Gehäuse gelagerten Griffhebel handeln. Der Betätigungsabschnitt kann aber zum Beispiel auch ein von einem Fahrzeuginsassen betätigter Taster oder dergleichen sein. Der Betätigungsabschnitt kann dazu ausgebildet sein, von einem Fahrzeuginsassen betätigt zu werden, um eine Fahrzeugtür von innen zu öffnen und/oder zu schließen.

Das Gehäuse und/oder der Betätigungsabschnitt umfasst einen Trägerabschnitt aus einem ersten Kunststoff und einen mit dem Trägerabschnitt stoffschlüssig verbundenen Dekorabschnitt, vorzugsweise Sichtabschnitt, der aus einem anderen Material besteht als der Trägerabschnitt. Der Trägerabschnitt trägt den Dekorabschnitt, vorzugsweise den Sichtabschnitt. Der Dekorabschnitt, vorzugsweise der Sichtabschnitt, ist vom Fahrzeuginnenraum direkt sichtbar und in der Regel dem Fahrzeuginnenraum zugewandt. Er bildet eine sogenannte A-Oberfläche. an die in optischer Hinsicht besonders hohe Anforderungen gestellt werden. Der Trägerabschnitt bildet eine sogenannte B-Oberfläche und kann zumindest abschnittsweise vom Fahrzeuginnenraum her nicht direkt sichtbar sein. Er kann beispielsweise an der dem Fahrzeuginnenraum abgewandten Rückseite des Betätigungsabschnitts angeordnet sein. Der Trägerabschnitt kann allerdings abschnittsweise auch eine dem Fahrzeuginnenraum zugewandte und von diesem direkt sichtbare Sichtfläche bilden.

Eine Vorderseite des Betätigungsabschnitts wird vorzugsweise durch die dem Fahrzeuginnenraum zugewandten Oberflächen des Betätigungsabschnitts definiert, wenn er im Fahrzeug eingebaut ist und sich in einer Ruheposition befindet. Die Grenze zwischen der Vorderseite und der Rückseite des Betätigungsabschnitts wird vorzugsweise durch die Oberflächen gegeben, die parallel zu der Oberfläche der Fahrzeugoberfläche weisen, die den Betätigungsabschnitt in einem in das Fahrzeug eingebauten und in einer Ruheposition befindenden Zustand direkt umgibt.

Vorzugsweise weist eine Oberfläche in Richtung ihrer Normalen (nach außen vom Material weggerichtet).

Direkt sichtbar bedeutet vorzugsweise, dass es keine weitere Beschichtung (z.B. Lack, Chrom) oder Umspritzung des Dekorabschnitts gibt. Der Kunststoff des Dekorabschnitts ist vorzugsweise die äußerste Oberflächenschicht des Betätigungsabschnitts im Bereich der direkt sichtbaren Bereiche des Dekorabschnitts.

Die Angabe von "erstem" Material/Kunststoff und "zweitem" Material/Kunststoff bestimmt nicht die Reihenfolge ihrer Herstellung. Die Erfindung umfasst zunächst die Herstellung des Trägerabschnitts (erster Kunststoff) und dann die Herstellung des Dekorabschnitts (zweiter Kunststoff), aber auch zunächst die Herstellung des Dekorabschnitts und dann die Herstellung des Trägerabschnitts.

Der Dekorabschnitt ist integral mit dem Trägerabschnitt verbunden, was vorzugsweise stoffschlüssig bedeutet, d.h. dass sie durch atomare oder molekulare Kräfte zusammengehalten werden und unlösbar sind, nur durch Zerstörung trennbar sind. Die Bedeutung umfasst jedoch auch eine Formschlussverbindung des Dekorabschnitts mit dem Trägerabschnitt, wobei der Formschluss im Spritzgussverfahren innerhalb eines Spritzgusswerkzeugs hergestellt worden ist. Eine Bindung durch atomare oder molekulare Kräfte ist daher nicht unbedingt erforderlich, sondern bevorzugt.

Indem für den hinsichtlich der optischen Anforderungen besonders kritischen Dekorabschnitt, vorzugsweise Sichtabschnitt, ein anderes Material als für den Trägerabschnitt verwendet wird, können Trägerabschnitt und Dekorabschnitt, vorzugsweise Sichtabschnitt, gezielt an die jeweiligen Anforderungen angepasst werden. Durch die stoffschlüssige Verbindung ist gleichzeitig eine einstöckige Komponente gebildet, so dass keine zusätzlichen Befestigungs-mittel erforderlich sind. Dies verbessert nicht nur das optische Erscheinungsbild, sondern erleichtert auch die Herstellung und Montage.

Wie erläutert, bestehen an den Betätigungsabschnitt, aber auch an das Gehäuse, beispielsweise eine den Betätigungsabschnitt aufnehmende Gehäusemulde, nicht unerhebliche Anforderungen hinsichtlich der Belastbarkeit, insbesondere der maximalen Bruchlast. Diese können problemlos erfüllt werden, indem für den Trägerabschnitt ein entsprechend belastbares Material gewählt wird. Gleichzeitig kann durch Wahl eines geeigneten, anderen Materials für den Dekorabschnitt, vorzugsweise Sichtabschnitt, eine optisch besonders hochwertige Oberfläche realisiert werden ohne dass das hierzu verwendete, und häufig nicht ausreichend belastbare Material die Belastbarkeit des Gehäuses bzw. des Betätigungsabschnitts insgesamt beeinträchtigt. So ist beispielsweise für den Dekorabschnitt, vorzugsweise Sichtabschnitt, ein Material mit Metalloptik möglich. Eine wie erläutert aus Umweltschutz- und gesundheitlichen Gründen problematische Verchromung kann entfallen. Der Dekorabschnitt, vorzugsweise der Sichtabschnitt, kann eine erheblich geringere Dicke aufweisen als der Trägerabschnitt. Beispielsweise kann die größte Dicke des Dekorabschnitts, vorzugsweise Sichtabschnitts, weniger als 50 % der kleinsten Dicke des Trägerabschnitts, vorzugweise weniger als 20 % der kleinsten Dicke des Trägerabschnitts, betragen. Dadurch kann die Steifigkeit des Gehäuses bzw. des Betätigungsabschnitts, bereitgestellt durch den Trägerabschnitt, maximiert werden bei gleichzeitig geringer Neigung zu Oberflächenfehlern des Dekorabschnitts, vorzugsweise des Sichtabschnitts. Insbesondere wenn beispielsweise nur eine dem Fahrzeuginnenraum zugewandte Oberfläche durch den Dekorabschnitt, vorzugsweise Sichtabschnitt, gebildet ist, bildet dies eine einfach und ohne Oberflächenfehler herstellbare Geometrie.

Zusätzlich oder alternativ kann zu dem Betätigungsabschnitt auch das Gehäuse der Innentürgriffanordnung einen Trägerabschnitt aus einem ersten Kunststoff und einen mit dem Trägerabschnitt stoffschlüssig verbundenen Dekorabschnitt, vorzugsweise Sichtabschnitt, aus einem anderen, zweiten Material aufweisen. Ein Dekorabschnitt, vorzugsweise ein Sichtabschnitt, könnte durch einen beispielsweise an einen Trägerabschnitt des Gehäuses angespritzten Abschnitt aus einem anderen Material als das Gehäuse gebildet sein. Beispielhaft genannt sei insoweit eine den Betätigungsabschnitt aufnehmende Gehäusemulde. In diesem Fall könnte eine dem Fahrzeuginnenraum zugewandte Muldenvorderseite durch den Dekorabschnitt, vorzugsweise den Sichtabschnitt, gebildet sein und ein dahinterliegender, hinsichtlich Überlastanforderungen besonders relevanter Abschnitt durch den Trägerabschnitt. Beispielhaft genannt seien weiterhin Zierleisten in Metalloptik oder Lautsprechereinfassungen, Sofern sowohl der Betätigungsabschnitt als auch das Gehäuse in der erfindungsgemäßen Weise einen Trägerabschnitt und einen Dekorabschnitt, vorzugsweise einen Sichtabschnitt, aufweisen, können die Trägerabschnitte jeweils aus demselben Material oder aus unterschiedlichen Materialien gebildet sein. Auch die Dekorabschnitte, vorzugsweise die Sichtabschnitte, können jeweils aus demselben Material oder aus unterschiedlichen Materialien gebildet sein.

Gemäß einer besonders praxisgemäßen Ausgestaltung kann das Gehäuse und/oder der Betätigungsabschnitt in einem Zweikomponentenspritzgussverfahren hergestellt worden sein. Dies erlaubt eine besonders einfache und kostengünstige Herstellung. Gleichzeitig können durch die Kombination des erfindungsgemäßen Aufbaus aus Trägerabschnitt und Dekorabschnitt, vorzugsweise Sichtabschnitt, und der Herstellung in einem Zweikomponentenspritzgussverfahren Oberflächenfehler besonders effizient minimiert werden, Es hat sich gezeigt, dass bei den eingangs erläuterten vollständig aus einem für die Oberfläche aus optischen Gründen gut geeigneten Kunststoff gespritzten Gehäuseabschnitten bzw. Betätigungsabschnitten in besonderem Maße eine Schwindung während der Aushärtung auftritt, die zu Oberflächenfehlern, wie Fließlinien oder Senken, führt, Indem gemäß der genannten Ausgestaltung der Dekorabschnitt, vorzugsweise der Sichtabschnitt, an den aus einem anderen Material gebildeten Trägerabschnitt angespritzt wird, werden eine Schwindung und die damit einhergehenden Oberflächendefekte minimiert. So bildet der Trägerabschnitt eine stabile Grundlage für das Anspritzen des Dekorabschnitts, vorzugsweise des Sichtabschnitts, wodurch Schwindung wesentlich reduziert werden kann. Fließlinien und Senken können zuverlässig vermieden werden. Gleichzeitig erlaubt die vorgenannte Ausgestaltung mit nur einem Spritzgusswerkzeug die Herstellung unterschiedlicher Dekorabschnitte, vorzugsweise Sichtabschnitte, zum Beispiel aus Kunststoffen unterschiedlicher Farben, abhängig von dem jeweiligen Anwendungs-fall. Die Flexibilität wird dadurch weiter erhöht.

Auch der Dekorabschnitt, vorzugsweise der Sichtabschnitt, kann aus einem Kunststoff bestehen.

Gemäß einer weiteren Ausgestaltung bildet der Trägerabschnitt und/oder ein dritter Abschnitt aus einem dritten Kunststoff eine Oberfläche mit Bereichen davon, die vom Fahrzeuginnenraum aus nicht direkt sichtbar sind, vorzugsweise wenn sich der Betätigungsabschnitt in einer Ruheposition befindet, wobei der Trägerabschnitt und/oder der dritte Abschnitt auf einer Rückseite des Betätigungsabschnitts angeordnet ist, deren Rückseite vom Fahrzeuginnenraum weg gerichtet ist oder sein soll.

Gemäß einer weiteren Ausgestaltung ist der Betätigungsabschnitt und/oder der dritte Abschnitt derart ausgebildet, dass er von einem Fahrzeuginsassen gegriffen wird, um eine Fahrzeugtür von innen zu öffnen und/oder zu schließen, wobei der Trägerabschnitt und/oder der dritte Abschnitt auf der Rückseite des Betätigungsabschnitts hintergriffen und/oder von dem Fahrzeuginsassen berührt werden soll.

Gemäß einer weiteren Ausgestaltung weist der Trägerabschnitt Lagermittel, vorzugsweise eine oder mehrere, vorzugsweise koaxiale Öffnungen, zum schwenkbaren Befestigen des Betätigungsabschnitts am Gehäuse an einer Rückseite des Betätigungsabschnitts auf, wobei im unmontierten, aber ansonsten fertigen Zustand des Betätigungsabschnitts der erste Kunststoff an einer Oberfläche des Betätigungsabschnitts zumindest an den Lagermitteln direkt sichtbar ist.

Erfindungsgemäß ist einer von dem Trägerabschnitt und dem Dekorabschnitt in einem ersten Spritzgussschuss unter Verwendung einer ersten Formhälfte und einer zweiten Formhälfte hergestellt worden, was zu einem ersten Formling führt, und wobei der jeweils andere von dem Trägerabschnitt und dem Dekorabschnitt in einem zweiten Spritzgussschuss auf den ersten Formling, vorzugsweise auf eine Außenfläche des ersten Formlings hergestellt worden, und zwar nach einem Wechsel der ersten Formhälfte oder der zweiten Formhälfte, was zu einem zweiten Formling führt, während der erste Formling in einer von der ersten Formhälfte und der zweiten Formhälfte verbleibt, bis der zweite Formling auf ihn geschossen worden ist.

Hierdurch kann eine gut definierte Grenze zwischen erstem und zweitem Kunststoff und eine hochwertige Oberfläche erzielt werden, da jeder von dem Trägerabschnitt und dem Dekorabschnitt in einer dafür optimierten geometrischen Gestaltung geschossen wird und der erste Formling genau dort positioniert wird, wo er für den zweiten Spritzgussschuss erwartungsgemäß positioniert sein soll.

Gemäß einer weiteren Ausgestaltung umfasste der Wechsel der ersten Formhälfte oder der zweiten Formhälfte einen Austausch einer von der ersten Formhälfte und der zweiten Formhälfte durch eine dritte Formhälfte, vorzugsweise durch Drehen einer drehbaren Werkzeugseite, während der erste Formling in der nicht ausgetauschten Werkzeughälfte verblieb, wobei der zweite Formling durch mindestens die dritte Formhälfte geformt wurde.

Hierdurch kann eine qualitativ hochwertige zweite Kavität bereitgestellt werden.

Gemäß einer weiteren Ausgestaltung bildet der zweite Kunststoff mindestens eine konvexe Kante, vorzugsweise eine obere Kante, wenn er im Fahrzeug unterhalb der Kopfposition eines sitzenden Fahrers des Fahrzeugs eingebaut ist, oder mindestens einen konvexen bogenförmigen Bereich vorzugsweise einen oberen Bereich, wenn er im Fahrzeug unterhalb der Kopfposition eines sitzenden Fahrers des Fahrzeugs eingebaut ist, einer Oberfläche des Betätigungsabschnitts aus, derart, dass sich der zweite Kunststoff zu einer Rückseite des Betätigungsabschnitts erstreckt.

Hierdurch kann das Erscheinungsbild der Betätigung aus Sicht des Fahrzeuginnenraums weiter verbessert werden.

Gemäß einer weiteren Ausgestaltung wird ein Bereich der Oberfläche der Rückseite des Betätigungsabschnitts durch den zweiten Kunststoff ausgebildet, der sich von einer Vorderseite des Betätigungsabschnitts zu der Rückseite des Betätigungsabschnitts erstreckt, der die mindestens eine Kante oder den bogenförmigen Bereich ausbildet.

Hierdurch kann das Erscheinungsbild der Betätigung aus Sicht des Fahrzeuginnenraums weiter verbessert werden, da der Dekorabschnitt sogar eine Fläche auf der Rückseite des Griffs ausbildet.

Gemäß einer weiteren Ausgestaltung wird ein weiterer Bereich der Oberfläche der Rückseite des Betätigungsabschnitts durch den ersten Kunststoff ausgebildet.

Gemäß einer weiteren Ausgestaltung weist der zweite Kunststoff an der Stelle, an der er die mindestens eine Kante oder bogenförmigen Bereich ausbildet, eine erhöhte Dicke gegenüber einer Dicke des zweiten Kunststoffs an der Vorderseite des Betätigungsabschnitts und/oder eine variierende Dicke auf.

Hierdurch ist es möglich, eine Kante oder einen bogenförmigen Bereich durch das zweite Material zu erzeugen, ohne einen Hinterschnitt zu erzeugen. Dies ist daher einfacher herzustellen.

Gemäß einer weiteren Ausgestaltung weist der die mindestens eine Kante oder bogenförmigen Bereich ausbildende Bereich des zweiten Kunststoffs, der sich von der Vorderseite des Betätigungsabschnitts zu der Rückseite des Betätigungsabschnitts erstreckt, mindestens eine Breite von 5 mm, vorzugsweise mindestens 10 mm, auf, und zwar vorzugsweise parallel zu einer Grenzlinie zwischen Vorderseite und Rückseite des Betätigungsabschnitts.

Hierdurch kann die Qualität des Oberflächenerscheinungsbilds, insbesondere, wenn eine hochglänzende und/oder metallisch anmutende Oberfläche gewünscht wird, weiter verbessert werden, da der zweite Kunststoff breitflächig in den Bereich fließen kann, der zu einer Oberfläche auf der Vorderseite des Betätigungsabschnitts wird.

Gemäß einer weiteren Ausgestaltung erstreckt sich der die mindestens eine Kante oder den bogenförmigen Bereich bildende Bereich des zweiten Kunststoffs, der sich von einer Vorderseite des Betätigungsabschnitts zur Rückseite des Betätigungsabschnitts erstreckt, über mindestens 25%, vorzugsweise mindestens 40%, besonders bevorzugt mindestens 70%, am bevorzugtesten 99% der Grenze zwischen Vorderseite und Rückseite des Betätigungsabschnitts, vorzugsweise entlang mindestens eines oberen Bereichs des Betätigungsabschnitts.

Hierdurch kann das Erscheinungsbild des Betätigungsabschnitts aus Sicht des Fahrzeuginnenraums weiter verbessert werden, da sich der Dekorabschnitt weitgehend nach hinten erstreckt. So ist beispielsweise die Tatsache, dass der Betätigungsabschnitt aus zwei Materialien besteht, für einen Insassen des Fahrzeugs möglicherweise nicht wahrnehmbar, wenn der obere Teil des Betätigungsabschnitts, wenn er konventionell in der Fahrzeugtür installiert ist, durch die erste Komponente ausgebildet wird, die sich nach hinten erstreckt.

Gemäß einer weiteren Ausgestaltung weist oder wies der Betätigungsabschnitt, weil beispielsweise durch anschließendes Schleifen entfernt, an der Stelle, an der sich der die mindestens eine Kante oder bogenförmigen Bereich ausbildende zweite Kunststoff von der Vorderseite des Betätigungsabschnitts zur Rückseite des Betätigungsabschnitts erstreckt, Folgendes auf:
- eine erste Werkzeugtrennungslinie, vorzugsweise parallel, jedoch, bevorzugt in Richtung der Rückseite, beabstandet von der Grenze zwischen Vorder- und Rückseite, an der Grenze zwischen dem ersten Kunststoff und dem zweiten und/oder dritten Kunststoff, und
- eine zweite Werkzeugtrennungslinie, vorzugsweise etwa parallel, insbesondere bevorzugt kollinear, zu einem Bereich der Grenze zwischen Vorderseite und Rückseite, die sich innerhalb des ersten Kunststoffs erstreckt.

Gemäß einer weiteren Ausgestaltung weist der Dekorabschnitt über mindestens 70%, vorzugsweise mindestens 80% seiner vorderen Seitenfläche, eine konstante Dicke auf, d.h. im Zweifelsfall mit einer Abweichung von weniger als 30%, vorzugsweise weniger als 20% der durchschnittlichen Dicke.

Hierdurch wird die Optik des Dekorabschnitts weiter verbessert, da der Fluss des zweiten Kunststoffmaterials verbessert wird. Vorzugsweise hat der Trägerabschnitt in den Bereichen, in denen der Dekorabschnitt eine konstante Dicke aufweist, eine variable Dicke, d.h. im Zweifelsfall mit einer Abweichung von mehr 30% vorzugsweise mehr als 50% der durchschnittlichen Dicke. Die Dicke wird vorzugsweise von der Vorderseite zur Rückseite gemessen, entlang einer Flächennormalen.

Gemäß einer weiteren Ausgestaltung weist der Dekorabschnitt über 70%, vorzugsweise mindestens 80% seiner vorderen Seitenfläche, eine Dicke in einem Bereich von 0,5 mm bis 3,5 mm, vorzugsweise in einem Bereich von 0,7 mm bis 1,5 mm auf.

Hierdurch wird die Optik des Dekorabschnitts weiter verbessert, da der Fluss des zweiten Kunststoffmaterials verbessert wird. Die Erfinder haben festgestellt, dass die Dicke weder kleiner sein soll, um Hindernisse zu vermeiden, noch größer sein soll, um Zebramuster zu vermeiden, als das angegebene Intervall, vorzugsweise sogar das bevorzugte Intervall, um das Risiko dieser unerwünschten Effekte zu minimieren.

Gemäß einer weiteren Ausgestaltung weist der Dekorabschnitt über 70%, vorzugsweise mindestens 90%, seiner vorderen Seitenfläche eine Oberflächenrauheit Ra kleiner oder gleich 2 µm, vorzugsweise kleiner oder gleich 1,1 µm, oder bevorzugt einen Glanz von mindestens 60 Glanzeinheiten gemessen bei 60°, vorzugsweise mindestens 70 Glanzeinheiten gemessen bei 60°, auf.

Hierdurch wird die Optik des Dekorabschnitts weiter verbessert. Die Erfinder haben festgestellt, dass sich die Erfindung besonders für Hochglanzoberflächen eignet, die sehr empfindlich auf Strömungsturbulenzen und Materialschrumpfung reagieren.

Gemäß einer weiteren Ausgestaltung macht der Dekorabschnitt mindestens 90%, vorzugsweise mindestens 99%, der Vorderseite des Betätigungsabschnitts aus.

Weiterhin kann der Trägerabschnitt aus einem verstärkten Kunststoff, insbesondere einem glasfaserverstärkten Kunststoff, bestehen. Hierdurch können besonders gute Trägereigenschaften erreicht werden. Grundsätzlich sind unterschiedlichste Materialkombinationen für Trägerabschnitt und Dekorabschnitt, vorzugsweise Sichtabschnitt, denkbar. Einige mögliche Materialkombinationen werden nachfolgend lediglich beispielhaft angegeben: Trägerabschnitt: PA6 verstärkt, Dekorabschnitt, vorzugsweise Sichtabschnitt: PA6 Dekor; Trägerabschnitt: PA6 mit Cool-Touch-Effekt, Dekorabschnitt, vorzugsweise Sichtabschnitt: PA6 Dekor; Trägerabschnitt: SAN verstärkt, Dekorabschnitt, vorzugsweise Sichtabschnitt; PC-ABS oder ABS; Trägerabschnitt: POM verstärkt, Dekorabschnitt, vorzugsweise Sichtabschnitt: POM Dekor.

Nach einer weiteren Ausgestaltung können der Trägerabschnitt und der Dekorabschnitt, vorzugsweise Sichtabschnitt, aus dem gleichen Kunststoffgrundstoff bestehen, wobei der Kunststoff des Trägerabschnitts verstärkt ist, insbesondere glasfaserverstärkt ist. Hierdurch kann insbesondere ein Zweikomponentenspritzgussprozess weiter vereinfacht werden. Darüber hinaus können der erste Kunststoff und der zweite Kunststoff identisch sein, vorzugsweise beide verstärkt durch ein Füllmaterial, z.B. Glasfaser. In diesem Fall wird bevorzugt, dass die Oberfläche des Dekorabschnitts genarbt ist. Es gibt andere Techniken zur Herstellung eines genarbten, oberflächennahen Betätigungsabschnitts, die oft gasunterstütztes Spritzgießen oder spezifische Konstruktionen des Trägerabschnitts erfordern, um massive Kunststoffanteile zu vermeiden, die zu Schrumpfungen führen, die sogar auf einer genarbten Oberfläche sichtbar wären. Diese neue Technik eines zweischichtigen (oder mehrschichtigen) Ansatzes macht es jedoch weniger notwendig oder sogar unnötig, gasunterstütztes Spritzgießen oder spezifische Designs des Trägerabschnitts zu verwenden, da der Dekorabschnitt per se dünn genug ist, um ein Schrumpfen zu vermeiden, und in einem separaten Schuss geformt wird.

Der Dekorabschnitt, vorzugsweise der Sichtabschnitt, kann eine andere Farbe besitzen als der Trägerabschnitt. Hierdurch wird eine besonders große Designfreiheit erreicht. Dekorabschnitt, vorzugsweise Sichtabschnitt, und Trägerabschnitt könnten aber grundsätzlich auch die gleiche Farbe besitzen.

Der Dekorabschnitt, vorzugsweise der Sichtabschnitt, kann nach einer weiteren Ausgestaltung aus einem Kunststoff mit Metalloptik bestehen. Solche Kunststoffe in Metalloptik, die insbesondere in Kunststoffspritzgussverfahren hergestellt werden können (Mould In Metal Colour) sind an sich bekannt. Sie besitzen eine einer Verchromung ähnliche Oberflächengüte ohne jedoch die Umwelt- und gesundheitlichen Probleme der Verchromung aufzuweisen. Wie außerdem erläutert, besitzen gerade solche Kunststoffe mit Metalloptik häufig nicht die erforderliche Belastbarkeit. Dieses Problem wird durch den Aufbau des Gehäuses bzw. Betätigungsabschnitts gelöst.

Der Trägerabschnitt kann nach einer weiteren Ausgestaltung zumindest abschnittsweise aus einem Kunststoff mit Cool-Touch-Effekt bestehen. In den Kunststoff des Trägerabschnitts können eine Mineralfüllung oder Metallpartikel, insbesondere ferromagnetische Metallpartikel, eingebettet sein. Durch das Einbetten einer Mineralfüllung oder von Metallpartikeln in den Kunststoff wird die üblicherweise mit Metalloberflächen assoziierte Kühle erreicht, obgleich ein Kunststoffmaterial eingesetzt wird, das entsprechend auch in einem Kunststoffspritzgussprozess verarbeitet werden kann. Beispielsweise kann der Trägerabschnitt die von einem Fahrzeuginsassen zum Betätigen der Fahrzeugtür zu ergreifende, dem Fahrzeuginnenraum abgewandte Rückseite des Betätigungsabschnitts bilden. Indem diese aus einem Kunststoff mit Cool-Touch-Effekt gebildet ist, ergibt sich für einen Fahrzeuginsassen in Kombination mit einem Kunststoff in Metalloptik für den die dem Fahrzeuginnenraum zugewandte Vorderseite des Betätigungsabschnitts bildenden Dekorabschnitt, vorzugsweise Sichtabschnitt, optisch und haptisch der Eindruck eines Metallgriffs. Um den Cool-Touch-Effekt zu erhöhen, kann der Trägerabschnitt aus einem Kunststoff mit guter Wärmeleitfähigkeit bestehen. Vorzugsweise zeigt ein Kunststoff den Cool-Touch-Effekt, wenn der mit dem dafür entwickelten Gerät "HapTemp" der Firma "ZIEGLER-Instruments GmbH" gemessene Wert gleich oder kleiner als 19, vorzugsweise gleich oder kleiner als 15 ist. Dieses Instrument ist in der Lage, ein Äquivalent der wahrgenommenen haptischen Temperatur zu messen, wobei Stahl einen Wert von 0, Glas einen Wert von 10, PTFE einen Wert von 20 aufweist. Diese Werte basieren auf einem "HapTemp" Gerät aus 2012 (Seriennr. 12.11.1), Software Version 16.2.8, zuletzt kalibriert im Januar 2019.

Nach einer weiteren Ausgestaltung kann in dem Trägerabschnitt ein Hohlraum ausgebildet sein. Kunststoffe mit Cool-Touch-Effekt bzw. Kunststoffe mit darin eingebetteter Mineralfüllung oder Metallpartikeln besitzen eine hohe Dichte. Um dem entgegenzuwirken, kann in dem Trägerabschnitt ein Hohlraum ausgebildet werden. Beispielsweise bei einem Kunststoffspritzgussprozess kann dies durch Injizieren von Gas in den noch fließfähigen Kunststoff erreicht werden, um entsprechendes Material zu verdrängen. Das Ausbilden eines solchen Hohlraums wäre auch beispielsweise denkbar bei einem Kunststoff, wie PA6-GF30.

Gemäß einer weiteren Ausgestaltung kann der Dekorabschnitt, vorzugsweise der Sichtabschnitt, aus einem für sichtbares Licht zumindest teiltransparenten Kunststoff bestehen. Gemäß einer diesbezüglichen weiteren Ausgestaltung können in den für sichtbares Licht zumindest teiltransparenten Kunststoff Streupartikel zum Streuen von sichtbarem Licht eingebettet sein. Durch die Verwendung eines für sichtbares Licht teiltransparenten oder vollständig transparenten Kunststoffs kann der Dekorabschnitt, vorzugsweise der Sichtabschnitt, durch eine geeignete Lichtquelle, wie LED's, beleuchtet werden, zum Beispiel im Rahmen einer Ambientebeleuchtung eines Fahrzeugs. Insbesondere wenn ein Kunststoff mit darin eingebetteten Streupartikel n verwendet wird, kommt es zu einer Streuung des Lichts und dadurch einem gleichmäßigen Austritt von Licht aus dem Gehäuse bzw. dem Betätigungsabschnitt unter Überwindung der Totalreflektion und folglich einem gleichmäßigen Beleuchtungseffekt. Derartige Kunststoffe sind beispielsweise unter dem Namen "Plexiglas LED" des Herstellers Evonik Industries verfügbar. Mit solchen Kunststoffen kann bei seitlicher Lichteinleitung ein diffuser Lichtaustritt an der Oberfläche des Dekorabschnitts, vorzugsweise des Sichtabschnitts erreicht werden.

Gemäß einer weiteren Ausgestaltung kann der Dekorabschnitt, vorzugsweise der Sichtabschnitt, in einem In-Mould-Painting Verfahren an den Trägerabschnitt angebunden worden sein, Das In-Mould-Painting Verfahren wird in diesem Zusammenhang als Spritzgussverfahren behandelt. Die Herstellweise entspricht grundsätzlich dem Zweikomponentenspritz-gussverfahren, wobei die den Dekorabschnitt, vorzugsweise den Sichtabschnitt, ausbildende Kavität des Spritzguss-werkzeugs von sehr geringer Dicke ist. Beispielsweise kann diese Kavität eine Dicke von weniger als 1 mm, vorzugweise weniger als 0,3 mm, besitzen. Die den Dekorabschnitt, vorzugsweise den Sichtabschnitt, bildende Komponente (Farbe) wird nach dem Spritzgießen des Trägerabschnitts in die Kavität für den Dekorabschnitt, vorzugsweise den Sichtabschnitt, eingepresst und bildet nach dem Aushärten eine einer Lackierung ähnliche Oberfläche. Die Designfreiheit hinsichtlich der Farbe des Dekorabschnitts, vorzugsweise des Sichtabschnitts kann auf diese Weise bei hoher Oberflächenqualität weiter erhöht werden.

Nach einer weiteren Ausgestaltung kann mit dem Trägerabschnitt ein dritter Abschnitt stoffschlüssig verbunden sein. Der dritte Abschnitt kann beispielsweise auf einer im montierten Zustand dem Fahrzeuginnenraum abgewandten Rückseite des Trägerabschnitts aufgebracht sein, so dass der dritte Abschnitt diese Rückseite beispielsweise des Betätigungsabschnitts bildet. Der Dekorabschnitt, vorzugsweise der Sichtabschnitt, kann, wie erläutert, an der dem Fahrzeuginnenraum zugewandten Vorderseite des Trägerabschnitts angeordnet sein und somit die Vorderseite des Betätigungsabschnitts bilden. Eine Herstellung des dritten Abschnitts ist ebenso in einem Kunststoffspritzgussverfahren, beispielsweise einem Dreikomponentenspritzgussverfahren möglich. So kann der dritte Abschnitt aus einem anderen Material bestehen als der Trägerabschnitt und/oder der Dekorabschnitt, vorzugsweise der Sichtabschnitt. Beispielsweise kann der Trägerabschnitt aus einem verstärkten Kunststoff, insbesondere einem glasfaserverstärkten Kunststoff, und der dritte Abschnitt aus einem Kunststoff mit Cool-Touch-Effekt bzw. mit eingebetteter Mineralfüllung oder Metallpartikeln bestehen und/oder der dritte Abschnitt kann aus einem Kunststoff bestehen, der weicher ist als der erste und/oder der zweite Kunststoff, wodurch ein Soft-Touch-Effekt entsteht. Dadurch können mit solchen Kunststoffen verbundene Schwierigkeiten, wie hohe Dichte und Sprödigkeit, auf den im Verhältnis zum Trägerabschnitt dünnen dritten Abschnitt begrenzt werden, so dass die Dichte und Belastbarkeit des Gehäuses bzw. Betätigungsabschnitts insgesamt aufgrund des in dieser Hinsicht optimierten Trägerabschnitts nicht beeinträchtigt wird. Wiederum lediglich beispielhaft werden nachfolgend hierfür denkbare Materialkombination angegeben: Trägerabschnitt: PA6 verstärkt, Dekorabschnitt, vorzugsweise Sichtabschnitt: PA6 Dekor, dritter Abschnitt: PA6 Cool-Touch; Trägerabschnitt: PA6 verstärkt oder PC verstärkt oder SAN verstärkt, Dekorabschnitt, vorzugsweise Sichtabschnitt: für sichtbares Licht (teil- )transparentes Material/mit lichtstreuenden Partikeln, dritter Abschnitt: PA6 Cool-Touch.

Die Erfindung löst die eingangs genannte Aufgabe durch ein Verfahren zum Herstellen einer erfindungsgemäßen Innentürgriffanordnung, wobei die Innentürgriffanordnung in einem Mehrkomponentenspritzgussverfahren, beispielsweise einem Zweikomponentenspritzgussverfahren oder einem Dreikomponentenspritz-gussverfahren, hergestellt wird. Wie eingangs erläutert, können hierdurch in herstellungstechnisch einfacher Weise besonders hochwertige Oberflächen bei gleichzeitig hoher Belastbarkeit erzeugt werden.

Nach einer Ausgestaltung des Verfahrens kann bei Verwendung von Kunststoffen für den Trägerabschnitt oder den dritten Abschnitt mit darin eingebetteten ferromagnetischen Partikeln vorgesehen sein, dass an eine Oberfläche des Trägerabschnitts im noch fließfähigen Zustand des Kunststoffs ein Magnet angelegt wird, so dass sich die ferromagnetischen Metallpartikel der Oberfläche annähern. Bei der Oberfläche kann es sich insbesondere um eine zum Ergreifen durch einen Fahrzeuginsassen vorgesehene Oberfläche handeln. Auf diese Weise kann die Verteilung der ferromagnetischen Metallpartikel in dem Kunststoff dahingehend beeinflusst werden, dass sich diese im Bereich der zum Anfassen durch einen Fahrzeuginsassen vorgesehenen Oberfläche konzentrieren. Der Cool-Touch-Effekt kann dadurch maximiert werden ohne dass das Material insgesamt von einer hohen Anzahl ferromagnetische Metallpartikel durchsetzt sein muss. Es ist mit der genannten Ausgestaltung auch möglich, durch Verwenden eines Magneten mit entsprechender Geometrie beispielsweise ferromagnetische Partikel nur entsprechend der Geometrie des Magneten an die Oberfläche zu bewegen bzw. umzuorientieren. Hierbei kann der Magnet an eine anschließend durch den Dekorabschnitt, vorzugsweise den Sichtabschnitt, zu bedeckende Oberfläche des Trägerabschnitts angelegt werden. Erfolgt dann beispielsweise ein anschließendes Aufbringen des Dekorabschnitts, vorzugsweise des Sichtabschnitts in einem In-Mould-Painting Verfahren, kann die Geometrie an der Oberfläche sichtbar gemacht werden. Auf diese Weise kann beispielsweise ein Logo oder eine andere Grafik optisch dargestellt werden.

Gemäß einer weiteren Ausgestaltung umfasst das Spritzgussverfahren das Herstellen eines Betätigungsabschnitts nach zumindest den folgenden Schritten:
a) Herstellen eines der Folgenden:
   - eines Trägerabschnitts aus einem ersten Kunststoff, und
   - eines Dekorabschnitts aus einem zweiten Kunststoff in einem ersten Spritzgussschuss unter Verwendung einer ersten Formhälfte und einer zweiten Formhälfte, die einen ersten Hohlraum definieren, was zu einem ersten Formling führt,
b) Herstellen des jeweils anderen von dem Trägerabschnitt und dem Dekorabschnitt in einem zweiten Spritzgussschuss auf den ersten Formling, vorzugsweise auf eine Außenfläche des ersten Formlings, nach einem Wechsel der ersten Formhälfte und/oder der zweiten Formhälfte, um einen zweiten Hohlraum zu definieren, was zu einem zweiten Formling führt, während der erste Formling in einer von der ersten Formhälfte und der zweiten Formhälfte verbleibt, bis der zweite Formling auf ihn geschossen worden ist, wobei der erste Formling vorzugsweise durch einen Schieber in dem jeweiligen Hohlraum gehalten wird, vorzugsweise ein Schieber, der Bohrungen für eine Drehachse des Betätigungsabschnitts maskiert, oder durch eine hinterschnittene Geometrie des jeweiligen Hohlraums, wodurch dann das Teil vorzugsweise durch Zwangsentformen aus der Form ausgestoßen wird.

Hierdurch ist es möglich, Oberflächen und Trennlinien zwischen den beiden oder mehreren Kunststoffen derart zu gestalten, dass die optische Qualität des Dekorabschnitts verbessert wird. Vorzugsweise umfasst das Verfahren einen weiteren Werkzeugwechsel und in einem dritten Spritzgussschuss, der einen dritten Abschnitt herstellt, und zwar durch Aufspritzen eines dritten Kunststoffs auf den ersten und/oder zweiten Formling, was zu einem dritten Formling führt. Der dritte Kunststoff ist vorzugsweise ein Material, das weicher ist als der erste und/oder zweite Kunststoff und/oder den Cool-Touch-Effekt aufweist. Unter "maskieren" wird hier bevorzugt verstanden, ein bestimmtes Volumen zu versperren, währen unter "demaskieren" Verstanden wird, ein versperrtes Volumen wieder freizugeben.

Gemäß einer weiteren Ausgestaltung umfasst der Wechsel der ersten Formhälfte und/oder der zweiten Formhälfte einen Austausch einer von der ersten Formhälfte und der zweiten Formhälfte durch eine dritte Formhälfte, vorzugsweise durch Drehen einer drehbaren Werkzeugseite, während der erste Formling in der nicht ausgetauschten Werkzeughälfte verbleibt, wobei der zweite Formling durch mindestens die dritte Formhälfte geformt wird.

Gemäß einer weiteren Ausgestaltung ist oder soll der Dekorabschnitt zumindest teilweise direkt vom Fahrzeuginnenraum aus sichtbar und dem Fahrzeuginnenraum zugewandt sein, wobei der Betätigungsabschnitt eine dem Fahrzeuginnenraum zugewandte Vorderseite und eine dem Fahrzeuginnenraum abgewandte Rückseite aufweist, wobei vorzugsweise der Trägerabschnitt im ersten Spritzgussschuss und der Dekorabschnitt im zweiten Spritzgussschuss hergestellt wird, wobei in dem einen von dem ersten Hohlraum und dem zweiten Hohlraum, welcher den Dekorabschnitt ausbilden sollen, der zweite Kunststoff wie folgt eingespritzt wird:
a) an einer Stelle, die zu einem Abschnitt der Rückseite des Betätigungsabschnitts werden soll, derart, dass der zweite Kunststoff entlang mindestens einer konkaven Formkante, vorzugsweise einer oberen Kante, fließt, wenn er im Fahrzeug unterhalb der Kopfposition eines sitzenden Fahrers des Fahrzeugs installiert ist, oder entlang mindestens eines konkaven bogenförmigen Formbereichs zur Vorderseite des Betätigungsabschnitts hin, oder
b) an einer Stelle, die durch ein Gehäuse verdeckt ist, z.B. durch eine Gehäusewand zwischen dem Fahrzeuginnenraum und dieser Stelle, in der der Betätigungsabschnitt beweglich angeordnet sein soll.

Gemäß einer weiteren Ausgestaltung fließt der zweite Kunststoff um die mindestens eine Formkante oder den mindestens einen bogenförmigen Formbereich über eine Breite von mindestens 5 mm, vorzugsweise mindestens 10 mm.

Hierdurch wird die Oberflächenqualität verbessert, da der Fluss des zweiten Kunststoffs besser ausgeglichen wird. Darüber hinaus ist es möglich, das Material des Trägerabschnitts für zusätzliche Blickwinkel oder bei Betätigung des Betätigungsabschnitts zu verbergen.

Gemäß einer weiteren Ausgestaltung wird der Trägerabschnitt im ersten Spritzgussschuss und der Dekorabschnitt im zweiten Spritzgussschuss hergestellt, wobei in der einen von der ersten Formhälfte und der zweiten Formhälfte, in der der erste Formling verbleibt, bis der zweite Formling auf ihn geschossen worden ist, ein erstes Volumen, das einen Formbereich für eine Oberfläche der Rückseite des Betätigungsabschnitts, vorzugsweise an der Kante des Hohlraums, definiert, im ersten Spritzgussschuss durch einen Schieber dieser Formhälfte, der sich vorzugsweise quer zur Werkzeugöffnungsrichtung bewegt, oder durch einen vorstehenden Bereich der jeweils anderen Formhälfte maskiert wird, und wobei das erste Volumen nach dem ersten Spritzgussschuss und vorzugsweise vor dem zweiten Spritzgussschuss durch Zurückziehen des Schiebers oder Entfernen des vorstehenden Bereichs der jeweils anderen Formhälfte freigelegt wird, derart, dass für den zweiten Spritzgussschuss ein Durchgang, vorzugsweise entlang einer Außenfläche des ersten Formlings, von einer Oberfläche der Rückseite zu der Vorderseite hin vorhanden ist, der es dem zweiten Kunststoff ermöglicht, entlang der mindestens einen Formkante oder des mindestens einen bogenförmigen Formbereichs zur Vorderseite des Betätigungsabschnitts zu fließen.

Hierdurch ist es möglich, den Kunststoff zu der Vorderseite zu führen, obwohl der zweite Kunststoff auf der Rückseite eingespritzt wird.

Gemäß einer weiteren Ausgestaltung ist eine Oberfläche des ersten oder zweiten Hohlraums, die eine Vorderseite des Dekorabschnitts ausbildet, zu über 70%, vorzugsweise zu mindestens 90%, ihrer Oberfläche poliert, und zwar derart, dass der Wert der Oberflächenrauhigkeit Ra kleiner oder gleich 2 µm, vorzugsweise kleiner oder gleich 1,1 µm, ist.

Hierdurch ist eine hochglänzende Oberfläche direkt aus der Form heraus erreichbar und durch die Verwendung des speziellen Zweikomponenten-Designs gemäß der Erfindung ist keine weitere Oberflächenbehandlung erforderlich, um ein hochwertiges Erscheinungsbild zu erzielen.

Ein Ausführungsbeispiel der Erfindung wird nachfolgend anhand von Figuren näher erläutert. Es zeigen schematisch:
- FIG. 1: eine erfindungsgemäß hergestellte Innentürgriffanordnung in einer perspektivischen Ansicht,
- FIG. 2: den Griffabschnitt der in FIG. 1 gezeigten Innentürgriffanordnung in vergrößerter perspektivischer Darstellung, und
- FIG. 3: eine Schnittansicht entlang der Linie A-A in FIG. 2.
- FIGS. 4a-g und 5: basierend auf den vorstehenden Figuren einen Betätigungsabschnitt gemäß einer weiteren Ausführungsform der Erfindung, wobei FIGS. 4a-4f in einem in FIG. 5 dargestellten Schnitt bei B-B den Herstellungsprozess des Betätigungsabschnitts darstellen, FIG. 4g einen entsprechenden Abschnitt des fertigen Betätigungsabschnitts darstellt, und FIG. 5 eine perspektivische Ansicht auf der Ober- und Rückseite des Betätigungsabschnitts darstellt.

Soweit nichts Anderes angegeben ist, bezeichnen in den Figuren gleiche Bezugszeichen gleiche Gegenstände.

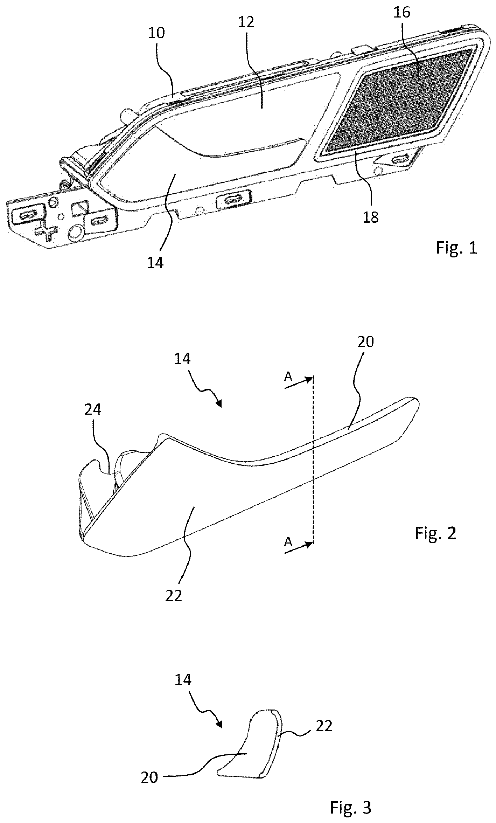

Die in FIG. 1 gezeigte Innentürgriffanordnung umfasst ein Gehäuse 10, mit dem sie an einer Tür eines Fahrzeugs, wie eines PKW oder LKW, befestigt werden kann. Das Gehäuse 10 weist eine Griffmulde 12 auf, in der ein Betätigungsabschnitt 14, in dem vorliegenden Beispiel ein Griffabschnitt 14, in der in FIG. 1 gezeigten Ruheposition aufgenommen ist. Aus dieser Ruheposition kann der Griffabschnitt 14 um eine im montierten Zustand beispielsweise vertikale Schwenkachse mit seinem in FIG. 1 rechten freien Ende aus der Griffmulde 12 herausgeschwenkt werden. Über eine entsprechende Verbindung wird durch ein Herausschwenken des Griffabschnitts 14 die Fahrzeugtür entriegelt, so dass diese anschließend von einem Fahrzeuginsassen geöffnet werden kann. Zum Herausschwenken des Griffabschnitts 14 greift der Fahrzeuginsasse in die Griffmulde 12 ein und hintergreift den Griffabschnitt 14. Der Griffabschnitt 14 bildet in dem gezeigten Beispiel einen Griffhebel 14. In das Gehäuse 10 integriert ist außerdem ein Lautsprecher 16, der von einer Einfassung 18 umgeben ist.

In der vergrößerten Darstellung der FIG. 2 ist zu erkennen, dass der Griffabschnitt 14 einen in der Ruheposition dem Fahrzeuginnenraum abgewandten Trägerabschnitt 20 und einen dem Fahrzeuginnenraum zugewandten Dekorabschnitt, vorzugsweise Sichtabschnitt 22 aufweist. Der Trägerabschnitt 20 bildet die von einem Fahrzeuginsassen zu hintergreifende Rückseite des Griffabschnitts 14 und der Sichtabschnitt 22 bildet die aus dem Fahrzeuginnenraum direkt sichtbare Vorderseite des Griffabschnitts 14. Der Träger an seinem in FIG. 2 linken Ende Lagermittel 24 auf, mit denen der Griffabschnitt 14 schwenkbar an dem Gehäuse 10 gelagert werden kann. In der Schnittansicht der FIG. 3 ist zu erkennen, dass der Sichtabschnitt 22 eine erheblich geringere Dicke aufweist als der Trägerabschnitt 20.

Der Sichtabschnitt 22 ist stoffschlüssig mit dein Trägerabschnitt 20 verbunden. In dem gezeigten Beispiel ist der Sichtabschnitt 22 in einem Zweikomponentenspritzgussverfahren an den Trägerabschnitt 20 angespritzt worden. Der Trägerabschnitt 20 besteht aus einem Kunststoff, beispielsweise einem verstärkten Kunststoff, wie einem glasfaserverstärkten Kunststoff. Er kann eine eingebettete Mineralfüllung oder eingebettete Metallpartikel, beispielsweise ferromagnetische Metallpartikel, aufweisen, so dass ein Fahrzeuginsasse beim Hintergreifen des Trägerabschnitts 20 zum Herausschwenken des Griffabschnitts 14 aus der Griffmulde 12 des Gehäuses 10 eine kühle Oberfläche und damit den Eindruck eines Metalls wahrnimmt. Entsprechend kann der Sichtabschnitt 22 aus einem Kunststoff mit Metalloptik (Mould In Metal Colour) bestehen. Der Sichtabschnitt 22 könnte aber auch aus anderen Kunststoffen bestehen, beispielsweise andersfarbigen Kunststoffen oder dergleichen. Auch könnte der Sichtabschnitt 22 in einem In-Mould-Painting Verfahren stoffschlüssig mit dem Trägerabschnitt 20 verbunden worden sein.

In dem gezeigten Beispiel ist auch die Einfassung 18 des Lautsprechers 16 in einem Zweikomponentenspritzgussverfahren an das Gehäuse 10 angespritzt worden. Die Einfassung 18 kann beispielsweise aus dem für den Sichtabschnitt 22 verwendeten Material bestehen.

Der Dekorabschnitt 22 ist dazu bestimmt, zumindest teilweise direkt vom Fahrzeuginnenraum aus sichtbar zu sein und dem Fahrzeuginnenraum zugewandt zu sein, wobei der Griffabschnitt 14 eine Vorderseite, die dem Fahrzeuginnenraum zugewandt ist, und eine Rückseite aufweist, die dem Fahrzeuginnenraum abgewandt ist.

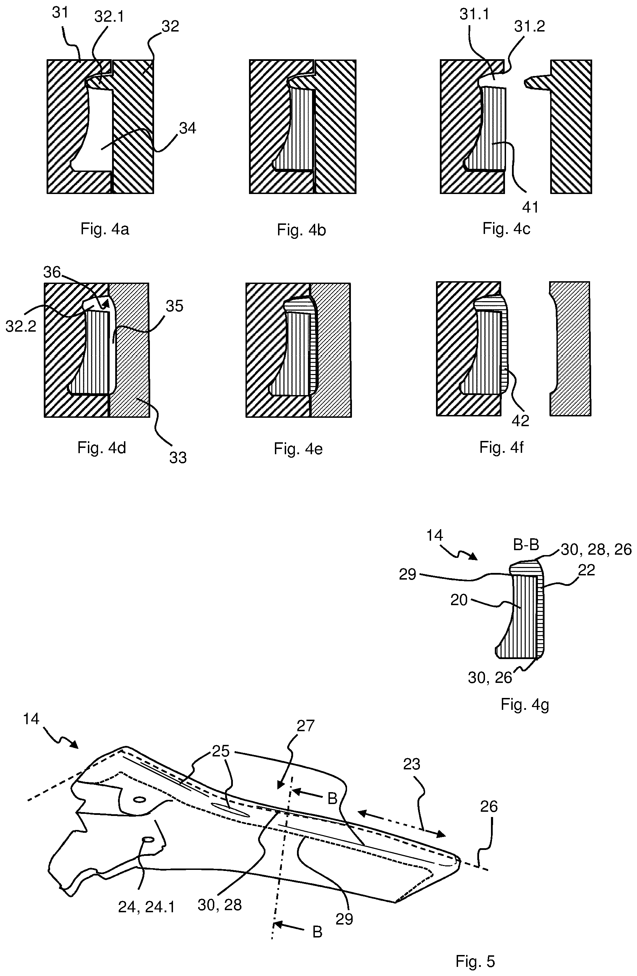

Im Folgenden werden die FIGS. 4a-4g und 5 näher beschrieben. Der Trägerabschnitt 20 bildet eine Oberfläche mit Abschnitten hiervon, die nicht direkt vom Fahrzeuginnenraum aus sichtbar sind, wobei der Trägerabschnitt 20 auf der Rückseite des Griffabschnitts 14 angeordnet ist, wobei die Rückseite vom Fahrzeuginnenraum weg gerichtet ist oder sein soll. Der Griffabschnitt 14 ist derart ausgebildet, dass er von einem Fahrzeuginsassen gegriffen werden kann, um eine Fahrzeugtür von innen zu öffnen und/oder zu schließen, wobei der Trägerabschnitt 20 auf der Rückseite des Griffabschnitts 14 von dem Fahrzeuginsassen hintergriffen und von diesem berührt werden soll. Der Trägerabschnitt 20 weist Lagermittel 24 auf, hier zwei koaxiale Öffnungen 24.1, zur schwenkbaren Befestigung des Griffabschnitts 14 am Gehäuse 10, und zwar an einer Rückseite des Griffabschnitts 14, wobei im unmontierten, aber ansonsten fertigen Zustand des Griffabschnitts 14 der erste Kunststoff an einer Oberfläche des Griffabschnitts 14 zumindest an den Lagermitteln 24 direkt sichtbar ist. Der Trägerabschnitt 20 wurde in einem ersten Spritzgussschuss unter Verwendung einer ersten Formhälfte 31 und einer zweiten Formhälfte 32 hergestellt, was zu einem ersten Formling 41 führt, wobei der Dekorabschnitt 22 in einem zweiten Spritzgussschuss auf den ersten Formling 41, hier auf eine Außenfläche des ersten Formlings hergestellt worden ist, und zwar nach einem Wechsel der zweiten Formhälfte 32, was zu einem zweiten Formling 42 führt, während der erste Formling in der ersten Formhälfte verbleibt, bis der zweite Formling 42 auf ihn geschossen worden ist. Der Wechsel der zweiten Formhälfte 32 umfasste einen Austausch der zweiten Formhälfte 32 durch eine dritte Formhälfte 33, hier durch Drehen einer drehbaren Werkzeugseite, während der erste Formling 41 in der nicht ausgetauschten Werkzeughälfte 31 verbleibt, wobei der zweite Formling 42 durch mindestens die dritte Formhälfte 33 geformt wird. Ein Oberflächenbereich der Rückseite des Griffabschnitts 14 wird durch den zweiten Kunststoff ausgebildet, der sich von einer Vorderseite des Griffabschnitts 14 zur Rückseite des Griffabschnitts 14 erstreckt und den bogenförmigen Bereich 28 ausbildet. Ein weiterer Oberflächenbereich der Rückseite des Griffabschnitts 14 wird durch den ersten Kunststoff gebildet. Der zweite Kunststoff weist an der Stelle, an der er den bogenförmigen Bereich 28 ausbildet, eine erhöhte Dicke im Vergleich zu einer Dicke des zweiten Kunststoffs an der Vorderseite des Griffabschnitts 14 und eine variierende Dicke auf. Der Bereich des zweiten Kunststoffs, der sich von der Vorderseite des Griffabschnitts 14 zur Rückseite des den bogenförmigen Bereich 28 ausbildenden Griffabschnitts 14 erstreckt, weist mindestens eine Breite 23, und zwar vorzugsweise parallel zu einer Grenzlinie 26 zwischen Vorderseite und Rückseite des Griffabschnitts, von mindestens 10 mm auf, hier sogar einige Zentimeter. Der Bereich des zweiten Kunststoffs, der sich von einer Vorderseite des Griffabschnitts 14 zu der Rückseite des den bogenförmigen Bereich 28 ausbildenden Griffabschnitts 14 erstreckt, erstreckt sich über mindestens 40% der Grenze 26 zwischen Vorderseite und Rückseite des Griffabschnitts 14 entlang eines oberen Bereichs 27 des Griffabschnitts. An der Stelle, an der sich der zweite Kunststoff von der Vorderseite des Griffabschnitts 14 zur Rückseite des den bogenförmigen Bereichs 28 ausbildenden Griffabschnitts 14 erstreckt, weist der Griffabschnitt 14 eine erste Werkzeugtrennungslinie 29 an der Grenze zwischen dem ersten Kunststoff und dem zweiten und/oder einem dritten Kunststoff, die parallel, aber in Richtung der Rückseite beabstandet von der Grenze 26 zwischen Vorderseite und Rückseite innerhalb des ersten Kunststoffs verläuft, und eine zweite Werkzeugtrennungslinie 30 auf,) welche sich innerhalb des ersten Kunststoffs erstreckt und zu einem Bereich der Grenze 26 zwischen Vorderseite und Rückseite kollinear ist. Der Dekorabschnitt 22 weist auf seiner gesamten Vorderseiten-Oberfläche und zusätzlich auf den Bereichen auf der Rückseite einen Glanz von mindestens 70 Glanzeinheiten gemessen bei 60° auf, die durch die Reflexionslinien 25 veranschaulicht werden.

Der Griffabschnitt 14 wird in einem Mehrkomponentenspritzgussverfahren durch die folgenden Schritte hergestellt:
a) Herstellen des Trägerabschnitts 20 des ersten Kunststoffs in einem ersten Spritzgussschuss unter Verwendung einer ersten Formhälfte 31 und einer zweiten Formhälfte 32, die einen ersten Hohlraum 34 definieren, was zu einem ersten Formling 41 führt (FIG. 4a-4c),
b) Herstellen des Dekorabschnitts 22 in einem zweiten Spritzgussschuss auf den ersten Formling 41 auf eine Außenfläche des ersten Formlings nach einem Wechsel der zweiten Formhälfte 32, um einen zweiten Hohlraum 35 zu definieren, was zu einem zweiten Formling 42 führt (Fig. 4d-4f), während der erste Formling 41 in der ersten Formhälfte 31 verbleibt, bis der zweite Formling 42 auf ihn geschossen worden ist. Der erste Formling wird in dem entsprechenden Hohlraum 34, 35 durch einen Schieber gehalten, der die Löcher 26.1 für eine Drehachse des Griffabschnitts 14 abdeckt.

Der Wechsel der zweiten Formhälfte 32 umfasst einen Austausch der zweiten Formhälfte 32 durch eine dritte Formhälfte 33 durch Drehen einer drehbaren Werkzeugseite, während der erste Formling 40 in der nicht ausgetauschten Werkzeughälfte 31 verbleibt, wobei der zweite Formling 42 durch die dritte Formhälfte 33 und die erste Werkzeughälfte 31 geformt wird. In den zweiten Hohlraum 35, der den Dekorabschnitt 22 ausbilden soll, wird der zweite Kunststoff an eine Stelle eingespritzt, die zu einem Bereich der Rückseite des Griffabschnitts 14 werden soll. Hier wird es von der ersten Formhälfte 31 im Bereich des ersten Volumens 31.1 eingespritzt und fließt dann in den durch die dritte Formhälfte 33 definierten Bereich des zweiten Hohlraums 35. Der zweite Kunststoff fließt entlang mindestens eines mehr als 135° abgewinkelten konkaven bogenförmigen Formbereichs 36 zur Vorderseite des Griffabschnitts 14 über eine Breite 23 von mindestens 10 mm. Die erste Formhälfte 31 weist ein erstes Volumen 31.1 auf, das einen Formbereich für eine Oberfläche der Rückseite des Griffabschnitts 14 am Rand 31.2 des Hohlraums definiert, der durch die Werkzeughälfte 31 definiert ist, die in dem ersten Spritzgussschuss durch einen vorstehenden Bereich 32.1 der zweiten Formhälfte 32 maskiert ist. Das erste Volumen 31.1 wird nach dem ersten Spritzgussschuss und vorzugsweise vor dem zweiten Spritzgussschuss durch Zurückziehen des vorstehenden Bereichs 32.1 freigelegt, derart, dass für den zweiten Spritzgussschuss ein Durchgang 32.2 entlang einer Außenfläche des ersten Formlings 41 von einer Oberfläche der Rückseite zur Vorderseite hin vorhanden ist, so dass der zweite Kunststoff entlang des bogenförmigen Formbereichs 36 zur Vorderseite des Griffabschnitts 14 fließen kann. Die Werkzeugoberfläche des zweiten Hohlraums 35 für den Dekorabschnitt 22 ist so poliert, dass der Wert der gemittelten Oberflächenrauheit Ra kleiner als 2 µm ist.

Mit dieser Erfindung ein Verfahren zum Herstellen eines solchen Türgriffs (Betätigungsabschnitt) vorgestellt worden. Dieser weist mindestens zwei Kunststoffschichten auf, Trägerabschnitt und Dekorationsabschnitt, die mittels Spritzgießen verbunden sind: die erste Schicht bildet eine rückseitige Oberfläche und die zweite Schicht bildet eine sichtbare vorderseitige Oberfläche aus. Es wird bevorzugt, dass die erste Schicht durch einen ersten Werkzeughohlraum geformt wird, wobei die zweite Schicht unter Verwendung eines modifizierten Werkzeughohlraums auf die erste Schicht geformt wird, während die erste Schicht in einem Bereich des ersten Hohlraums verbleibt. Weiterhin wird der modifizierte Hohlraum vorzugsweise "hochglanzpoliert", um eine hochglänzende Oberfläche direkt aus dem Spritzgießwerkzeug zu erzeugen.

### Bezugszeichenliste

- 10: Gehäuse
- 12: Griffmulde
- 14: Betätigungsabschnitt/Griffabschnitt
- 16: Lautsprecher
- 18: Einfassung
- 20: Trägerabschnitt
- 22: Dekorabschnitt, vorzugsweise Sichtabschnitt
- 23: Breite
- 24: Lagermittel
- 24.1: Bohrung für Drehachse
- 25: Reflexionslinien
- 26: Grenze zwischen Vorder- und Rückseite
- 27: Oberer Bereich
- 28: konvexer bogenförmiger Bereich
- 29: erste Werkzeugtrennungslinie
- 30: zweite Werkzeugtrennungslinie
- 31: erste Formhälfte
- 31,1: erstes Volumen
- 31.2: Rand des Hohlraums der ersten Werkzeughälfte
- 32: zweite Formhälfte
- 32.1: vorstehender Bereich
- 32.2: Durchgang
- 33: dritte Formhälfte
- 34: erster Hohlraum
- 35: zweiter Hohlraum
- 36: konkaver bogenförmiger Formbereich
- 41: erster Formling
- 42: zweiter Formling

## Patentansprüche

1. Verfahren zum Herstellen eines Betätigungsabschnitts (14) einer Innentürgriffanordnung, wobei der Betätigungsabschnitt (14) einen Trägerabschnitt (20) und einen mit dem Trägerabschnitt (20) integral verbundenen Dekorabschnitt (22) aufweist, wobei die Innentürgriffanordnung in einem Mehrkomponentenspritzgussverfahren hergestellt wird,
wobei das Spritzgussverfahren das Herstellen des Betätigungsabschnitts (14) umfasst durch mindestens die folgenden Schritte:
a) Herstellen eines der Folgenden:
- des Trägerabschnitts (20) aus einem ersten Kunststoff, und
- des Dekorabschnitts (22) aus einem zweiten Kunststoff in einem ersten Spritzgussschuss unter Verwendung einer ersten Formhälfte (31) und einer zweiten Formhälfte (32), welche einen ersten Hohlraum (34) definieren, was zu einem ersten Formling (41) führt,
b) Herstellen des jeweils anderen von dem Trägerabschnitt (20) und dem Dekorabschnitt (22) in einem zweiten Spritzgussschuss auf den ersten Formling (41) nach einem Wechsel der ersten Formhälfte (31)
oder der zweiten Formhälfte (32), um einen zweiten Hohlraum (35) zu definieren, was zu einem zweiten Formling (42) führt, während der erste Formling (41) in einer der ersten Formhälfte (31) und der zweiten Formhälfte (32) verbleibt, bis der zweite Formling (42) auf ihn geschossen worden ist.

2. Verfahren nach Anspruch 1,
**dadurch gekennzeichnet, dass**
der Wechsel der ersten Formhälfte (31) oder der zweiten Formhälfte (32) einen Austausch einer der ersten Formhälfte (31) und der zweiten Formhälfte (32) durch eine dritte Formhälfte (33) umfasst, während der erste Formling (40) in der nicht ausgetauschten Werkzeughälfte (31) verbleibt, wobei der zweite Formling (42) durch mindestens die dritte Formhälfte (33) geformt wird.

3. Verfahren nach Anspruch 1 oder 2,
**dadurch gekennzeichnet, dass**
der Dekorabschnitt (22) zumindest teilweise direkt vom Fahrzeuginnenraum aus sichtbar und dem Fahrzeuginnenraum zugewandt ist oder sein soll, wobei der Betätigungsabschnitt (14) eine Vorderseite, welche dem Fahrzeuginnenraum zugewandt sein soll, und eine Rückseite aufweist, welche dem Fahrzeuginnenraum abgewandt soll, wobei in dem einen von dem ersten Hohlraum (34) und dem zweiten Hohlraum (35), welcher den Dekorabschnitt (22) ausbilden soll, der zweite Kunststoff wie folgt eingespritzt wird:
a) an einer Stelle, welche zu einem Bereich der Rückseite des Betätigungsabschnitts (14) werden soll, derart, dass der zweite Kunststoff entlang mindestens einer konkaven Formkante oder mindestens eines konkaven bogenförmigen Formabschnitts (36) zur Vorderseite des Betätigungsabschnitts (14) hin fließt, oder
b) an einer Stelle, welche durch ein Gehäuse (10) verdeckt ist, in welchem der Betätigungsabschnitt (14) beweglich angeordnet sein soll.
wobei der zweite Kunststoff vorzugsweise um die mindestens eine Formkante oder den mindestens einen bogenförmigen Formabschnitt (36) vorzugsweise über mindestens eine Breite (23) von 5 mm fließt.

4. Verfahren nach Anspruch 3,
**dadurch gekennzeichnet, dass**
der Trägerabschnitt (20) in dem ersten Spritzgussschuss und der Dekorabschnitt (22) in dem zweiten Spritzgussschuss hergestellt wird,
wobei in der einen von der ersten Formhälfte (31) und der zweiten Formhälfte (32), in welcher der erste Formling (41) verbleibt, bis der zweite Formling (41) auf ihn geschossen worden ist, ein erstes Volumen (31.1), welches einen Formabschnitt für eine Oberfläche der Rückseite des Betätigungsabschnitts (14) definiert, in dem ersten Spritzgussschuss durch einen Schieber dieser Formhälfte (31) oder durch einen vorstehenden Abschnitt (32.1) der jeweils anderen Formhälfte maskiert wird, und
wobei das erste Volumen (31.1) nach dem ersten Spritzgussschuss durch Zurückziehen des Schiebers oder Entfernen des vorstehenden Abschnitts (32.1) der jeweils anderen Formhälfte freigelegt wird, derart, dass für den zweiten Spritzgussschuss ein Durchgang (32.2) von einer Oberfläche der Rückseite zu der Vorderseite hin vorhanden ist, welcher es dem zweiten Kunststoff ermöglicht, entlang der mindestens einen Formkante oder des mindestens einen bogenförmigen Formabschnitts (36) zu der Vorderseite des Betätigungsabschnitts (14) zu fließen.

5. Verfahren nach einem der Ansprüche 1 bis 4,
**dadurch gekennzeichnet, dass**
eine Oberfläche des ersten oder zweiten Hohlraums (34, 35), welche eine Vorderseite des Dekorabschnitts (22) ausbildet, über mindestens 70% ihrer Oberfläche poliert ist, derart, dass der Wert der Oberflächenrauheit Ra kleiner oder gleich 2 µm ist.

## Claims

1. A method for manufacturing an actuating portion (14) of an interior door handle assembly, wherein the actuating portion (14) comprises a carrier portion (20) and a decorative portion (22) integrally connected to the carrier portion (20), and wherein the interior door handle assembly is manufactured in a multicomponent injection molding method,
**characterized in that**
the injection molding method comprises the manufacturing of the actuating portion (14) by at least the following steps:
a) manufacturing one of the following:
- the carrier portion (20) made of a first plastic and
- the decorative portion (22) made of a second plastic, in a first injection molding shot using a first mold half (31) and a second mold half (32) which define a first cavity (34), resulting in a first molded part (41),
b) manufacturing the other of the carrier portion (20) and the decorative portion (22) in a second injection molding shot onto the first molded part (41) after the first mold half (31) and/or the second mold half (32) has been exchanged in order to define a second cavity (35), resulting in a second molded part (42), while the first molded part (41) remains in one of the first mold half (31) and the second mold half (32) until the second molded part (42) has been shot onto the first molded part.

2. The method according to claim 1, **characterized in that** the exchanging of the first mold half (31) and/or the second mold half (32) comprises replacing of one of the first mold half (31) and the second mold half (32) with a third mold half (33), while the first molded part (40) remains in the unreplaced tool half (31), and the second molded part (42) is shaped by at least the third mold half (33).

3. The method according to claim 1 or 2, **characterized in that** the decorative portion (22) is at least partially directly visible from the vehicle interior and faces or is intended to face the vehicle interior, the actuating portion (14) has a front side, which is intended to face the vehicle interior, and a rear side, which is intended to face away from the vehicle interior, and, in the one of the first cavity (34) and the second cavity (35) which is intended to form the decorative portion (22), the second plastic is injected as follows:
a) at a point which is intended to become a region of the rear side of the actuating portion (14), such that the second plastic flows along at least one concave mold edge or at least one concave arcuate mold portion (36) towards the front side of the actuating portion (14), or
b) at a point which is concealed by a housing (10) in which the actuating portion (14) is intended to be movably arranged,
the second plastic preferably flowing around the at least one mold edge or the at least one arcuate mold portion (36) preferably over at least a width (23) of 5 mm.

4. The method according to claim 3, **characterized in that** the carrier portion (20) is manufactured in the first injection molding shot and the decorative portion (22) is manufactured in the second injection molding shot, and, in the one of the first mold half (31) and the second mold half (32) in which the first molded part (41) remains until the second molded part (41) has been shot onto the first molded part, a first volume (31.1) which defines a mold portion for a surface of the rear side of the actuating portion (14) is masked in the first injection molding shot by a slide of said mold half (31) or by a protruding portion (32.1) of the other mold half, and the first volume (31.1) is exposed after the first injection molding shot by retraction of the slide or by removal of the protruding portion (32.1) of the other mold half, such that, for the second injection molding shot, there is a passage (32.2) from a surface of the rear side towards the front side, said passage allowing the second plastic to flow along the at least one mold edge or the at least one arcuate mold portion (36) to the front side of the actuating portion (14).

5. The method according to any one of claims 1 to 4, **characterized in that** a surface, of the first or second cavity (34, 35), that forms a front side of the decorative portion (22) is polished over at least 70% of its surface such that the value of the surface roughness Ra is less than or equal to 2 pm.

## Revendications

1. L'invention concerne un procédé de fabrication d'une partie d'actionnement (14) d'un ensemble poignée de porte intérieure, la partie d'actionnement (14) comprenant une partie de support (20) et une partie décorative (22) intégralement reliée à la partie de support (20), et l'ensemble poignée de porte intérieure étant fabriqué selon un procédé de moulage par injection à composants multiples,
**caractérisé en ce que**
le procédé de moulage par injection comprend la fabrication de la partie d'actionnement (14) par au moins les étapes suivantes :
a) la fabrication de l'un des éléments suivants :
- la partie de support (20) réalisée en un premier plastique et
- la partie décorative (22) faite d'un deuxième plastique, dans une première injection de moulage en utilisant une première moitié de moule (31) et une deuxième moitié de moule (32) qui définissent une première cavité (34), résultant en une première partie moulée (41),
b) la fabrication de l'autre de la partie de support (20) et de la partie décorative (22) dans un deuxième moulage par injection sur la première partie moulée (41) après que la première moitié de moule (31) et/ou la deuxième moitié de moule (32) a été échangée afin de définir une deuxième cavité (35), résultant en une deuxième partie moulée (42), tandis que la première partie moulée (41) reste dans l'une de la première moitié de moule (31) et de la deuxième moitié de moule (32) jusqu'à ce que la deuxième partie moulée (42)
a été projetée sur la première pièce moulée.

2. Procédé selon la revendication 1, **caractérisé en ce que** le remplacement de la première moitié de moule (31) et/ou de la deuxième moitié de moule (32) comprend le remplacement de l'une de la première moitié de moule (31) et de la deuxième moitié de moule (32) par une troisième moitié de moule (33), tandis que la première partie moulée (40) reste dans la moitié d'outil non remplacée (31), et la deuxième partie moulée (42) est formée par au moins la troisième moitié de moule (33).

3. Procédé selon la revendication 1 ou 2, **caractérisé en ce que** la partie décorative (22) est au moins partiellement directement visible depuis l'intérieur du véhicule et fait face ou est destinée à faire face à l'intérieur du véhicule, la partie d'actionnement (14) a un côté avant, qui est destiné à faire face à l'intérieur du véhicule, et un côté arrière, qui est destiné à être tourné à l'opposé de l'intérieur du véhicule, et, dans la première cavité (34) ou la deuxième cavité (35) qui est destinée à former la partie décorative (22), le deuxième plastique est injecté comme suit :
a) en un point qui est destiné à devenir une région du côté arrière de la partie d'actionnement (14), de sorte que le deuxième plastique s'écoule le long d'au moins un bord de moule concave ou d'au moins une partie de moule arquée concave (36) vers le côté avant de la partie d'actionnement (14), ou
b) en un point qui est caché par un boîtier (10) dans lequel la partie d'actionnement (14) est destinée à être agencée de manière mobile,
le deuxième plastique s'écoulant de préférence autour de l'au moins un bord de moule ou de l'au moins une partie de moule arquée (36) de préférence sur au moins une largeur (23) de 5 mm.

4. Procédé selon la revendication 3, **caractérisé en ce que** la partie de support (20) est fabriquée dans le premier moulage par injection et
la partie décorative (22) est fabriquée dans la deuxième partie de moulage par injection,
et, dans l'une de la première moitié de moule (31) et de la deuxième moitié de moule (32) dans laquelle la première partie moulée (41) reste jusqu'à ce que la deuxième partie moulée (41) ait été projetée sur la première partie moulée, un premier volume (31.1) qui définit une partie de moule pour une surface du côté arrière de la partie d'actionnement (14) est masqué dans le premier moulage par injection par un coulisseau de ladite moitié de moule (31) ou par une partie saillante (32.1) de l'autre moitié de moule, et le premier volume (31.1) est exposé après le premier moulage par injection par rétraction du coulisseau ou par retrait de la partie saillante (32.1) de l'autre moitié de moule, de sorte que, pour la deuxième injection, il existe un passage (32.2) depuis une surface du côté arrière vers le côté avant, ledit passage permettant au deuxième plastique de s'écouler le long du au moins un bord de moule ou de l'au moins une partie de moule arquée (36) vers le côté avant de la partie d'actionnement (14).

5. Procédé selon l'une quelconque des revendications 1 à 4, **caractérisé en ce qu'**une surface de la première ou de la deuxième cavité (34, 35) qui forme une face avant de la partie décorative (22) est polie sur au moins 70 % de sa surface de telle sorte que la valeur de la rugosité de surface Ra est inférieure ou égale à 2 µm.
